# EUROPEAN PATENT SPECIFICATION

(11) **EP 0 644 703 B1**
(45) Date of publication and mention of the grant of the patent: **15.03.2000**
(21) Application number: 94303115.3
(22) Date of filing: 28.04.1994
(51) Int. Cl.: H04Q 7/32

(54) **Mobile equipment for cellular telephony**
Mobiles Gerät für Zellulartelefon
Poste mobile pour téléphonie cellulaire

(30) Priority: 21.09.1993 GB 9319475
(43) Date of publication of application: 22.03.1995
(73) Proprietor: NOKIA MOBILE PHONES LTD., 24101 Salo (FI)
(72) Inventor: Pelkonen, Sakari, 90240 Oulu (FI)
(74) Representative: Morton, Colin David

(56) References cited:
- EP-A- 0 369 110
- EP-A- 0 481 714
- WO-A-91/12698
- L' CHO DES RECHERCHES, no.139, 1990 ISSY FR, ISSN 0012-9283, pages 13-20, XP 000386290 JOLIE ET AL. 'Une application de la carte à microprocesseur: le module d'identité d'abonné du radiotéléphone numérique européen'

## Description

This invention relates to mobile equipment for cellular radio telephony networks, such as GSM, and to a method of operating such equipment.

A cellular radio telephony system has a plurality of base stations serving geographical areas called "cells" and a plurality of mobile handsets (or mobile stations) carried by subscribers to the system. Each mobile station comprises mobile equipment (ME) and a component which carries the identity of the subscriber and other subscriber related information. This component is called a SIM (subscriber identity module) card. The SIM card is a smart card either having the format of a credit card or it may alternatively be made to a smaller format, called plug-in SIM. The SIM card is frequently but not invariably removable from the mobile equipment. The SIM card contains the international mobile subscriber identity (IMSI) which unambiguously identifies a subscriber. Without a valid IMSI, telephone service is not accessible, apart from emergency calls. A typical SIM card consists of the card itself, edge connectors on the card for electrically connecting the card to the mobile equipment and a chip. The chip includes a microprocessor, a program memory, temporary memory and non-volatile memory. All data which must be retained when power is switched off in the mobile equipment is stored in the non-volatile memory in the SIM cad.

All data accessible from the mobile equipment is stored in datafields in the SIM card. The datafields holding temporary memory may become inaccessible to the mobile equipment. with the result that the SIM card assumes a locked state, if for example:
a) the SIM card is removed from the mobile equipment during update of a datafield. This is possible because such updating can occur without the subscriber knowing that it is happening and because there is no mechanical interlock preventing withdrawal of the SIM card from the mobile equipment.
b) a power failure occurs during an update; for example due to low battery power, resulting in only partial updating of a datafield. Hitherto, if a SIM card has assumed such a locked state it has been unusable and it has been necessary to dispose of it and replace it with a new SIM card.

The invention aims to restore to usability a SIM card which is in a locked state.

WO-A-91/12698 discloses a cellular radio telephone system where subscribers are equipped with SIM cards each of which not only uniquely identifies the subscriber but also contains customised data, so that when the SIM card is inserted in a radio telephone, the latter operates in a pre-selected manner, eg by restricting access to or from certain numbers or sites. However this prior specification is not concerned with repairing a damaged SIM, which is the aim of the present invention.

According to one aspect the invention provides mobile equipment for a cellular telephone system, the equipment having first means for detecting if a datafield on a SIM card can be read, second means for detecting if an unreadable datafield can be written to and third means for writing initial information into said unreadable datafield in the event of the second means detecting that the unreadable datafield can be written to.

According to another aspect the invention provides a method of restoring to usability a SIM card which is in a locked state as a result of having an unreadable datafield, comprising the steps of detecting if a datafield on the SIM card can be read from associated mobile equipment, detecting if an unreadable datafield can be written to and, if it can, writing initial information into said datafield.

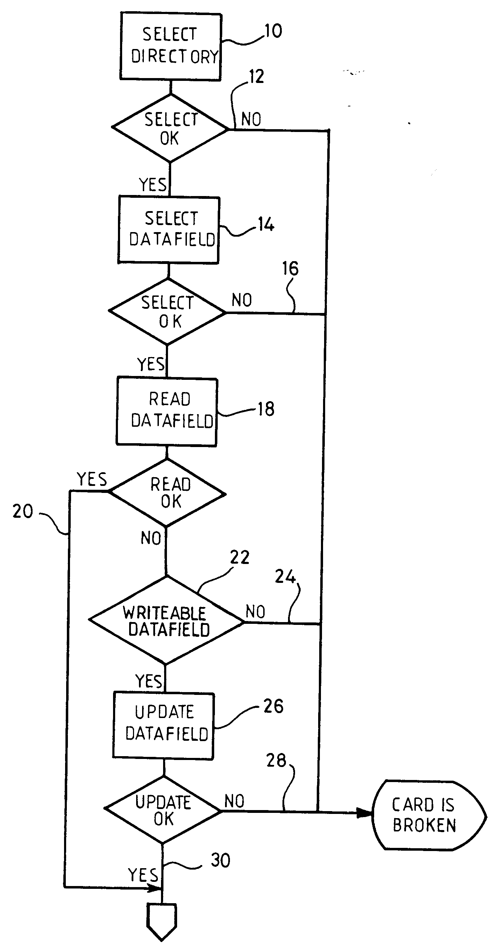

The invention will now be further described, by way of example, with reference to the accompanying drawing which shows the logic sequence of steps carried out in the performance of the invention.

The preferred embodiment of the invention is a hand held mobile station in a cellular radio telephone system conforming to the GSM standard. The identity of the subscriber, and other subscriber related information, is held in a SIM card which is similar in format to a credit card and which is removable from the remainder of the base station, the remainder being called the mobile equipment (ME). The SIM card provides storage of subscriber related information of three types:
1) data fixed during initialisation of the card by the system operator, such as IMSI, subscriber authentication key, access control class.
2) temporary network data, for example temporary mobile subscriber identity (TMSI), location area information (LAI), cypher key (Kc) or forbidden public land mobile networks (PLMNs).
3) Service related data, eg language preference advice of charge.

The data which is fixed in the SIM card cannot be written to. The temporary data is stored in datafields which can be written to and the invention is concerned with rectifying the problem of a card becoming unusable in the circumstances previously explained.

The SIM card has of the order of six datafields in which accessible data is stored. The ME cannot directly access the memory of the SIM card, the memory can only send commands to the SIM card via a serial communication line which is established when the SIM card is correctly inserted in the ME.

When the SIM card is first obtained from the system operator, all empty datafields are filled with FF hex, so the ME can initialise a datafield by filling the whole of the datafield.

Referring to the accompanying drawing, the ME sends a select directory command 10 to the SIM card. If the response is negative this indicates that the SIM card is broken and must be replaced, as indicated by line 12. If the response is positive, the ME sends a select datafield command 14 to the SIM card. If the response is negative, the card is broken and must be replaced as indicated by line 16. If the response is positive, the ME sends a read datafield command 18. If the response thereto is positive this particular datafield has no problems, as indicated by line 20. If the response is negative, the invention is brought into effect by the ME detecting if the datafield can be written to, as indicated at 22. If the datafield cannot be written to, the card is broken as indicated by line 24. If the datafield can be written to the ME issues a command 26 to the SIM card which has the effect of updating the datafield with the data which this datafield would have contained on first supply from the service operator. If the response to the update is not satisfactory, the card is broken, as indicated by 28. If the update is satisfactorily undertaken (line 30), the SIM card has, in effect, been repaired and can be retained for further use and subsequently updated by the service operator.

The sequence of logic steps set out in the drawing are performed by controlling software in the ME. Hence, for the purpose of the invention the software of the ME must be modified to render it suitable to perform the sequence operation set out in the drawing. No alteration to the SIM card is necessary for performance of the invention.

The ME checks sequentially all datafields which can be written to on the SIM card, by repeating the routine indicated in the drawing.

## Claims

1. Mobile equipment for a cellular telephone system, the equipment having first means for detecting (18) if a datafield on a SIM card can be read, second means for detecting (22) if an unreadable datafield can be written to and third means for writing (26) initial information into said unreadable datafield in the event of the second means detecting that the unreadable datafield can be written to.

2. Mobile equipment according to claim 1, wherein the initial information corresponds to the information in that datafield when the SIM card is obtained from the system operator.

3. Mobile equipment according to claim 1 or 2, and in combination with a SIM card.

4. Mobile equipment according to claim 3, wherein said datafield is one of a plurality of datafields which can be written to on the SIM card.

5. A method of restoring to usability a SIM card which is in a locked state as a result of having an unreadable datafield, comprising the steps of detecting (18) if a datafield on the SIM card can be read from associated mobile equipment, detecting (22) if an unreadable datafield can be written to and, if it can, writing (26) initial information into said datafield.

## Patentansprüche

1. Mobile Ausrüstung für ein zellulares Telefonsystem mit einem ersten Mittel zum Detektieren (18), ob ein Datenfeld auf einer SIM-Karte gelesen werden kann, mit einem zweiten Mittel zum Detektieren (22), ob ein unlesbares Datenfeld zugeschrieben werden kann, und mit einem dritten Mittel zum Schreiben (26) der Anfangsinformation in das unlesbare Datenfeld für den Fall, daß das zweite Mittel detektiert, daß das unlesbare Datenfeld zugeschrieben werden kann.

2. Mobile Ausrüstung nach Anspruch 1, wobei die Anfangsinformation der Information in dem Datenfeld entspricht, wenn die SIM-Karte vom Systemoperator erhalten wird.

3. Mobile Ausrüstung nach Anspruch 1 oder 2 und in Kombination mit einer SIM-Karte.

4. Mobile Ausrüstung nach Anspruch 3, wobei das Datenfeld eins aus einer Vielzahl von Datenfeldern ist, die auf der SIM-Karte Zugeschrieben werden können.

5. Ein Verfahren zum Wiederherstellen der Brauchbarkeit einer SIM-Karte, die sich als Ergebnis des Aufweisens eines unlesbaren Datenfeldes in einem gesperrten Zustand befindet, mit den Stufen des Detektierens (18), ob ein Datenfeld auf der SIM-Karte von einer zugehörigen mobilen Ausrüstung gelesen werden kann, des Detektierens (22), ob ein unlesbares Datenfeld zugeschrieben werden kann, und, falls es geht, des Einschreibens (26) der Anfangsinformation in das Datenfeld.

## Revendications

1. Poste mobile pour système de téléphonie cellulaire, le poste ayant un premier moyen (18) pour détecter si un champ de données sur une carte SIM (module d'identité d'abonné) peut être lu, un second moyen (22) pour détecter si on peut écrire dans un champ de données illisible et un troisième moyen (26) pour écrire l'information initiale dans ledit champ de données illisible dans le cas où le second moyen a détecté que l'on peut écrire dans le champ de données illisible.

2. Poste mobile selon la revendication 1, dans lequel l'information initiale correspond à l'information dans ce champ de données lorsque la carte SIM est obtenue à partir de l'opérateur du système.

3. Poste mobile selon la revendication 1 ou 2, et en combinaison avec une carte SIM.

4. Poste mobile selon la revendication 3, dans lequel ledit champ de données est l'un parmi une pluralité de champs de données dans lesquels on peut écrire sur la carte SIM.

5. Procédé de restauration de l'utilisation d'une carte SIM se trouvant dans un état bloqué en conséquence d'avoir un champ illisible, comprenant une étape (18) pour détecter si un champ de données sur la carte SIM peut être lu depuis le poste mobile associé, une étape (22) pour détecter si on peut écrire sur un champ illisible et, si on le peut, une étape d'écriture (26) de l'information initiale dans ledit champ de données.
